Europäisches Patentamt

European Patent Office

Office européen des brevets

(19)

(11) **EP 0 610 903 B1**

(12) **EUROPÄISCHE PATENTSCHRIFT**

(45) Veröffentlichungstag und Bekanntmachung des Hinweises auf die Patenterteilung:
**13.05.1998 Patentblatt 1998/20**

(51) Int Cl.⁶: **H04N 11/00**

(21) Anmeldenummer: **94101945.7**

(22) Anmeldetag: **09.02.1994**

(54) **Verbessertes kompatibles Farbfernsehsystem mit umschaltbarer Decodierung**

Improved compatible colour television system with switchable decoding

Système de télévision en couleurs compatible amélioré avec décodage commutable

(84) Benannte Vertragsstaaten:
**AT BE CH DE ES GB IT LI PT**

(30) Priorität: **10.02.1993 DE 4303883**

(43) Veröffentlichungstag der Anmeldung:
**17.08.1994 Patentblatt 1994/33**

(73) Patentinhaber: **GRUNDIG Aktiengesellschaft
90762 Fürth (DE)**

(72) Erfinder: **Silverberg, Michael, Dr.,
GRUNDIG E.M.V.
D-90748 Fürth (DE)**

(56) Entgegenhaltungen:
EP-A- 0 509 390          WO-A-91/11882
DE-A- 3 807 739

• RADIO FERNSEHEN ELEKTRONIK Bd. 41, Nr. 8
, August 1992 , BERLIN (DD) Seiten 517 - 520
UNGENANNT 'PALplus im Heim'
• PATENT ABSTRACTS OF JAPAN vol. 17, no. 214
(E-1357)27. April 1993 & JP-A-04 352 594
(HITACHI LTD) 7. Dezember 1992
• PATENT ABSTRACTS OF JAPAN vol. 14, no. 85
(E-890)16. Februar 1990 & JP-A-01 295 589
(MITSUBISHI ELECTRIC CORP.) 29. November
1989

**Beschreibung**

Die Erfindung betrifft ein Farbfernsehsystem mit einem Sender zur Codierung und einem Empfänger zur Decodierung von Farbfernsehsignalen mit den im Oberbegriff des Anspruchs 1 angegebenen Merkmalen. Weiterhin betrifft die Erfindung einen Sender zur Codierung von Farbfernsehsignalen und einen Empfänger zur Decodierung von Farbfernsehsignalen.

Aus der DE-A-26 28 648 ist es bekannt, bei einem Farbfernsehsystem während des Bildfeldaustastintervalles für die aktive Dauer einer Zeile ein die Frequenz des Hilfsträgers aufweisendes Signal einzufügen und dieses empfangsseitig zur Korrektur einer Differenzverstärkungsverzerrung heranzuziehen. Beispielsweise kann das eingefügte Signal einer vorbestimmten definierten Farbe entsprechen.

Aus der DE-A-39 12 323 der Anmelderin ist ein Farbfernsehsystem mit Einrichtungen zur Codierung und Decodierung von Farbfernsehsignalen bekannt, bei dem im sendeseitigen Farbfernsehcoder eine zeitliche Unterabtastung von Chrominanz- und hochfrequenter Luminanzkomponente vorgenommen wird. Im empfangsseitigen Decoder werden vom empfangenen ersten und zweiten Halbbild einerseits die hochfrequenten Signalanteile des übertragenen Farbfernsehsignals (dadurch Beseitigung von Cross-Luminanz-Störungen) und andererseits die niederfrequenten Farbsignale addiert (dadurch Beseitigung von Cross-Color-Störungen) Dieses Verfahren wird in neueren Veröffentlichungen, beispielsweise in der Zeitschrift "Fernseh- und Kino-Technik, 44. Jg., Nr. 11/1990, S. 595-602, als Color-Plus-Codierung bzw. Color-Plus-Decodierung bezeichnet.

Bei einem unter dem Namen PALplus bekanntgewordenen Farbfernseh-Übertragungssystem sind zwei verschiedene Moden zur Decodierung und Trennung von Farb- und Luminanzkomponente vorhanden, wie beispielsweise im Tagungsband der IBC, July 1992, S. 160-164, beschrieben ist. Einerseits existiert ein Standardmodus, bei dem unter Verwendung von Notchfiltern oder Kammfiltern die Trennung erfolgt, andererseits existiert der Color-Plus-Modus, bei dem unter Zusammenwirken der vorgenannten sender- und empfangsseitigen Maßnahmen und unter Einsatz digitaler Signalverarbeitungstechniken eine weitaus bessere Trennung bei gleichzeitiger Erhöhung der Auflösung erreicht wird.

Weiterhin werden bei dem PALplus-Fernsehsystem im Sender Statusbits erzeugt, die auf der Empfangsseite die entsprechende Auswahl des Signalverarbeitungsverfahrens (Algorithmus) steuern. Wird eine Color-Plus-Codierung im Sender durchgeführt, so wird dieses dem Empfänger über die Statusbits mitgeteilt. Der Empfänger kann dann auf den entsprechenden Verarbeitungszweig der Decodierung umschalten. Umgekehrt erfolgt bei fehlender Color-Plus-Verarbeitung im Sender eine Umschaltung auf den Notchfilter- bzw. Kammfilter-Decoder.

Diese Umschaltung funktioniert, solange das ankommende Bildsignal mit relativ geringen Zeitbasisschwankungen (in der Größenordnung bis zu 20 ns) behaftet ist. Dieser Toleranzbereich wird überschritten, wenn das empfangene PALplus-Farbfernsehsignal mit den entsprechenden Statusbits zunächst mittels eines herkömmlichen Videorecorders (VHS- oder SVHS-Videorecorder oder 8mm-Videorecorder) aufgezeichnet wird. In diesem Fall bewirken die aufgezeichneten Statusbits, daß ein nach dem Verfahren der DE-A1-39 12 323 codiertes Signal nach der Wiedergabe vom Recorder vom Farbfernsehempfänger im Color-Plus-Decoder verarbeitet wird. Die durch den Videorecorder eingefügten Zeitbasisschwankungen führen jedoch in diesem Fall zu starken Bildstörungen beim Farbfernsehempfänger, insbesondere arbeitet der Color-Plus-Decoder fehlerhaft.

In der nicht vorveröffentlichten Patentanmeldung DE-42 27 664 der Anmelderin ist ein Weg aufgezeigt, wie diese Bildstörungen vermieden werden können. Dazu ist im Farbfernsehempfänger neben einer Einrichtung zur Auswertung der im Farbfernsehsignal enthaltenen Statusbits zusätzlich eine Auswerteschaltung vorgesehen, welche Zeitbasis-Schwankungen im Synchronsignal des Farbfernsehsignals mißt. Wird anhand der ausgewerteten Statusbits erkannt, daß senderseitig eine Color-Plus-Codierung des Farbfernsehsignals durchgeführt wurde, und liegen die gemessenen Zeitbasisschwankungen des Synchronsignals innerhalb eines vorgebbaren Toleranzintervalls, dann erfolgt eine Color-Plus-Decodierung. Ansonsten erfolgt eine Notchfilter-Decodierung.

Der Nachteil des in der DE-42 27 664 beschriebenen Systems besteht darin, daß dann, wenn bei der Videorecorder-Wiedergabe - was bei vielen Heimvideorecordern der Fall ist - zeitbasiskorrigierte Synchronsignale in das Farbfernsehsignal eingesetzt werden, fälschlicherweise darauf geschlossen wird, daß ein zeitstabiles Farbfernsehsignal vorliegt. Demzufolge wird im Fernsehempfänger eine Color-Plus-Decodierung durchgeführt, die jedoch eine schlechte Bildqualität zur Folge hat, da die für die Color-Plus-Decodierung notwendige zeitliche Stabilität des vom Videorecorder wiedergegebenen Signals nicht vorliegt.

Die Aufgabe der Erfindung besteht darin, diesen Nachteil zu beseitigen.

Diese Aufgabe wird bei einem Farbfernsehsystem mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen sind Gegenstand der abhängigen Ansprüche 2 - 4. Die Ansprüche 5 und 6 betreffen einen Sender zur Codierung von Farbfernsehsignalen in einem Farbfernsehsystem nach einem oder mehreren der Ansprüche 1 - 4. Die Ansprüche 7 - 12 beschreiben einen Empfänger zur Decodierung von Farbfernsehsignalen in einem Farbfernsehsystem nach einem oder mehreren der Ansprüche 1 - 4.

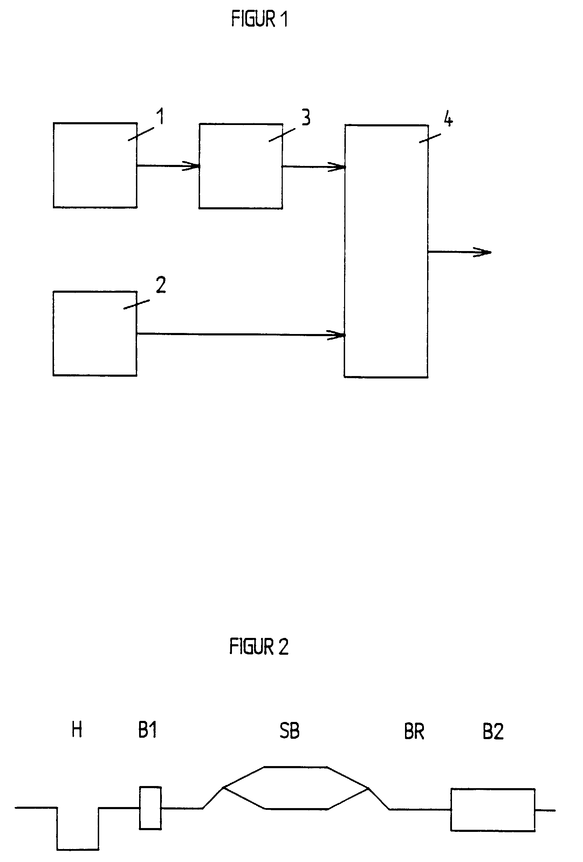

Die Vorteile der Erfindung bestehen im wesentlichen darin, daß durch die Auswertung eines im aktiven Teil einer nicht am Bildschirm sichtbaren Zeile des Farbfernsehsignals eingefügten Kennsignals eine sichere Entscheidung getroffen werden kann, ob das dem Fernsehempfänger zugeführte Signal ein zeitlich stabiles Signal ist, welches beispielsweise von der Hausantenne abgeleitet wurde, oder ein zeitlich instabiles Signal, welches beispielsweise ein von einem Videorecorder wiedergegebenes Signal sein kann. Weitere vorteilhafte Eigenschaften der Erfindung ergeben sich aus einem Ausführungsbeispiel, welches im folgenden anhand der Figuren 1 - 3 näher erläutert wird.

Es zeigt:

Fig. 1    ein Blockschaltbild mit den zum Verständnis der Erfindung notwendigen Baugruppen eines Fernsehsenders,

Fig. 2    ein Diagramm einer Kennsignalzeile eines Farbfernsehsignals, und

Fig. 3    ein Blockschaltbild mit den zum Verständnis der Erfindung notwendigen Baugruppen eines Fernsehempfängers.

Die Figur 1 zeigt ein Blockschaltbild mit den zum Verständnis der Erfindung notwendigen Baugruppen eines Fernsehsenders. Der gezeigte Fernsehsender weist einen PALplus-Coder 1 und einen PAL-Coder 2 auf, wie sie aus der Literatur bekannt sind. Im Signalweg des PALplus-Coders ist eine Eintastschaltung 3 zur Eintastung von Statusbits und Kennsignalen in das PALplus-codierte Farbfernsehsignal vorgesehen. Das Ausgangssignal des PAL-Coders 2 und das Ausgangssignal der Eintastschaltung 3 werden einem Schalter 4 zugeführt, an dessen Ausgang entweder ein mit Statusbits und Kennsignalen versehenes PALplus-Fernsehsignal oder ein herkömmliches PAL-Fernsehsignal zur Verfügung gestellt wird.

Die genannten Statusbits und Kennsignale werden mittels der Eintastschaltung 3 in den aktiven Teil der Zeile 23 des ersten Halbbildes des PALplus-Fernsehsignals eingetastet. Bei dieser Zeile 23 handelt es sich um eine im sogenannten vertikalen Overscan-Bereich des Bildschirms gelegene, d.h. nicht am Bildschirm sichtbare Zeile des PALplus-Fernsehsignals.

Die Figur 2 zeigt ein Diagramm dieser Kennsignalzeile des PALplus-Fernsehsignals. Sie enthält neben einem Zeilensynchronsignal H auf der hinteren Schwarzschulter des Zeilensynchronsignals einen Schwingungszug bzw. Burst B1, dessen Schwingungen die Farbträgerfrequenz von 4,43 MHz aufweisen. Dieser Burst B1 wird, wie allgemein üblich, bei der empfangsseitigen Farbträgerregenerierung verwendet. Weiterhin enthält die Kennsignalzeile Statusbits SB, die beispielsweise Auskunft geben über das Seitenverhältnis des Fernsehbildes, über den Ursprung des Fernsehbildes (Fernsehkamera oder Filmabtastung) und darüber, ob senderseitig eine Color-Plus-Codierung durchgeführt wurde oder nicht und ob ein Color-Plus-codiertes Signal vorliegt oder nicht. In der zweiten Hälfte der Zeile 23 wird zunächst ein Schwarzpegelsignal BR und daran anschließend erfindungsgemäß als Kennsignal ein zweiter Schwingungszug bzw. Burst B2 übertragen, dessen Schwingungen ebenfalls die Farbträgerfrequenz von 4,43 MHz aufweisen. Weiterhin ist der Burst B2 mit dem Synchronsignal normgerecht verkoppelt, d. h. er erfüllt die Beziehung

$$f_{sc} = 1135/4 \cdot f_H + 25 \text{ Hz.}$$

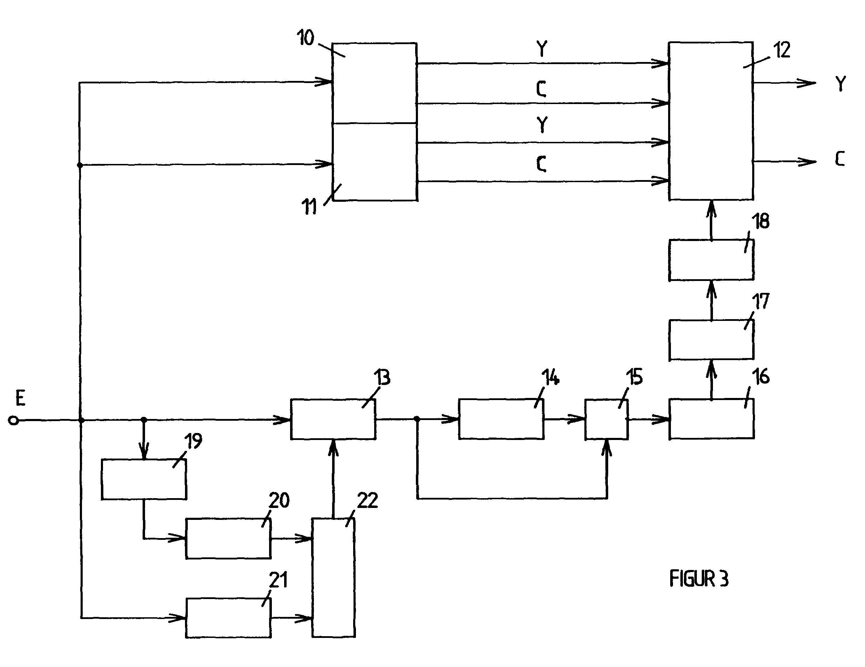

Die Figur 3 zeigt ein Blockschaltbild mit den zum Verständnis der Erfindung notwendigen Baugruppen eines Fernsehempfängers. Der gezeigte Fernsehempfänger weist einen Color-Plus-Decoder 10, einen Notchfilter-Decoder 11, einen Schalter 12, eine Torschaltung 13, eine Schaltung zur Erfassung von Zeitbasisschwankungen des Kennsignals bzw. Burstsignals B2 mit einem Verzögerungsglied 14, einem Addierer 15, einem Gleichrichter 16, einem Tiefpaß 17 und einer Schwellwertschaltung 18, sowie eine Torsteuerschaltung mit einer Synchronsignalabtrennstufe 19, einer Zählschaltung 20, einem Statusbitdecoder 21 und einer Verknüpfungslogik 22 auf.

Am Eingang E der gezeigten Anordnung steht entweder ein herkömmliches PAL-FBAS-Farbfernsehsignal oder ein PALplus-FBAS-Farbfernsehsignal an.

Liegt am Eingang E ein herkömmliches PAL-FBAS-Farbfernsehsignal an, so wird dieses beispielsweise aufgrund des Fehlens der Statusbits als solches identifiziert, die Torschaltung 13 geschlossen und der Schalter 12 für die Ausgangssignale Y und C des Notchfilterdecoders 11 durchlässig geschaltet. Letzteres ist in der Zeichnung nicht dargestellt.

Liegt am Eingang E ein PALplus-FBAS-Farbfernsehsignal an, dann wird in der Schaltung 14, 15, 16, 17, 18 zur Erfassung der Zeitbasisschwankungen des Kennsignals bzw. Burstsignals B2 überprüft, ob das der Anordnung zugeführte PALplus-FBAS-Farbfernsehsignal ein zeitstabiles Signal ist oder nicht. Ein zeitstabiles Signal liegt beispielsweise dann vor, wenn es sich um ein von der Empfangsantenne abgeleitetes Signal handelt. Ein nicht zeitstabiles Signal liegt beispielsweise dann vor, wenn es sich um ein von einem herkömmlichen VHS- oder SVHS-Heimvideorecorder wiedergegebenes Signal handelt.

Die genannte Überprüfung geschieht wie folgt: Aus dem am Eingang E anliegenden PALplus-FBAS-Farbfernsehsignal werden in der Synchronsignalabtennstufe 19 das Vertikal- und das Horizontalsynchronsignal abgetrennt und zur Steuerung der Zählschaltung 20 verwendet. Die Zählschaltung 20 ist so ausgelegt, daß sie während des Zeitintervalls der Zeile 23, in welchem der Burst B2 übertragen wird, ein Ausgangssignal definierten Pegels an die Verknüpfungslogik 22 abgibt.

Weiterhin wird das PALplus-FBAS-Farbfernsehsignal dem Statusbitdecoder 21 zugeführt. Durch Auswertung der Statusbits wird erkannt, daß ein PALplus-FBAS-Farbfernsehsignal vorliegt. Diese Information wird ebenfalls der Verknüpfungslogik 22 zugeführt.

Diese erzeugt ein Torsteuersignal, aufgrund dessen das Tor 13 in dem Zeitintervall der Zeile 23, in welchem der Burst B2 übertragen wird, durchlässig ist.

Der die Torschaltung 13 passierende Burst B2 wird zum einen direkt und zum anderen über das Verzögerungsglied 14, in welchem eine Verzögerung um 80 ms erfolgt, einem Addierer 15 zugeführt.

Handelt es sich bei dem am Eingang E anliegenden Signal um ein zeitlich stabiles Signal, dann löschen sich im Addierer 15 verzögertes und unverzögertes Signals aus. Liegt hingegen am Eingang E ein zeitlich instabiles Signal vor, dann weisen verzögertes und unverzögertes Signal verschieden große Amplituden auf.

Das am Ausgang des Addierers 15 vorliegende Signal wird über den Gleichrichter 16 und den Tiefpaß 17, in welchem eine Signalglättung erfolgt, der Schwellwertschaltung 18 zugeführt, an deren Ausgang das Steuersignal für den Schalter 12 zur Verfügung steht.

Im Falle eines zeitstabilen Signals ist der Schalter 12 für die Ausgangssignale Y und C des Color-Plus-Decoders 10 und im Falle eines nicht zeitstabilen Signals für die Ausgangssignale Y und C des Notchfilterdecoders 11 durchlässig.

Bei einer weiteren, nicht gezeichneten Ausführungsform ist der Notchfilterdecoder 11 durch einen Kammfilterdecoder ersetzt.

Eine vorteilhafte Weiterbildung der Erfindung besteht darin, die Phasenlage des Burstsignals B2 gegenüber dem Burstsignal B1 definiert zu wählen, beispielsweise 90°, 180° oder 270°. Auf diese Weise können zusätzliche Informationen über die senderseitige Signalverarbeitung vom Sender zum Empfänger übertragen werden, welche bezüglich eines Aufzeichnungs-/Wiedergabevorgangs transparent sind. Im Empfänger wird die genannte Phasenlage ausgewertet und zur Umschaltung zwischen weiteren empfängerseitigen Signalverarbeitungsverfahren verwendet.

**Patentansprüche**

1. Farbfernsehsystem mit einem Sender zur Codierung und einem Empfänger zur Decodierung von Farbfernsehsignalen, bei welchem empfangsseitig nach Maßgabe eines Steuersignals entweder eine Decodierung nach dem Color-Plus-Verfahren oder eine Decodierung mit Verwendung von Kamm- oder Notchfiltern erfolgt,
   **dadurch gekennzeichnet, daß**

   - im Sender in den aktiven Teil einer nicht am Bildschirm sichtbaren Zeile des Farbfernsehsignals ein Kennsignal eingesetzt wird, und

   - zur Ermittlung des Steuersignals im Empfänger die Zeitbasisschwankungen des Kennsignals ermittelt werden.

2. Farbfernsehsystem nach Anspruch 1,
   **dadurch gekennzeichnet, daß** das Kennsignal ein Burstsignal (B2) mit der Farbhilfsträgerfrequenz ist.

3. Farbfernsehsystem nach Anspruch 2,
   **dadurch gekennzeichnet, daß** im Empfänger ein Vergleich des Burstsignals (B2) mit dem um eine bestimmte Zeitdauer verzögerten Burstsignal (B2) erfolgt und daß das Steuersignal aus dem Vergleichsergebnis ermittelt wird.

4. Farbfernsehsystem nach Anspruch 2 oder 3,
   **dadurch gekennzeichnet, daß** durch eine geeignete Wahl der Phasenlage des Burstsignals (B2) gegenüber dem in der Horizontalaustastlücke des Farbfernsehsignals vorhandenen Burstsignal (B1) weitere Informationen über die senderseitige Signalverarbeitung vom Sender zum Empfänger übertragen werden, und diese weiteren Informationen bezüglich eines Aufzeichnungs-/Wiedergabevorganges transparent sind.

5. Sender zur Codierung von Farbfernsehsignalen in einem Farbfernsehsystem nach einem oder mehreren der Ansprüche 1 - 4, welcher Mittel (3) zum Einsetzen eines Burstsignals (B2) mit der Farbhilfsträgerfrequenz in den aktiven Teil einer nicht am Bildschirm sichtbaren Zeile des Farbfernsehsignals aufweist,
   **dadurch gekennzeichnet, daß** das Burstsignal (B2) weiterhin mit dem Synchronsignal des Farbfernsehsignals normgerecht verkoppelt ist.

6. Sender nach Anspruch 5,
   **dadurch gekennzeichnet, daß** das Burstsignal (B2) durch eine geeignete Wahl seiner Phasenlage gegenüber dem in der Horizontalaustastlücke des Farbfernsehsignals vorhandenen Burstsignal (B1) weitere Informationen über die senderseitige Signalverarbeitung enthält.

7. Empfänger zur Decodierung von Farbfernsehsignalen in einem Farbfernshsystem nach einem oder mehreren der Ansprüche 1 - 4,
   **dadurch gekennzeichnet, daß** er aufweist:

   - eine für das im aktiven Teil einer nicht am Bildschirm sichtbaren Zeile des Farbfernsehsignals vorhandene Kennsignal durchlässige Torschaltung (13) und

   - eine Schaltung (14, 15, 16, 17, 18) zur Erfassung der Zeitbasisschwankungen des Kennsignals, an deren Ausgang das Steuersignal zur Verfügung steht.

8. Empfänger nach Anspruch 7,
**dadurch gekennzeichnet,** daß er eine Torsteuerschaltung (19, 20, 21, 22) aufweist, die unter Verwendung der aus dem Farbfernsehsignal abgetrennten Synchronsignale und mindestens eines zusammen mit dem Farbfernsehsignal übertragenen Statusbits ein Torsteuersignal erzeugt.

9. Empfänger nach Anspruch 8,
**dadurch gekennzeichnet,** daß die Torsteuerschaltung eine Zählschaltung (20) aufweist, welcher die aus dem Farbfernsehsignal abgetrennten Synchronsignale zugeführt werden.

10. Empfänger nach Anspruch 9,
**dadurch gekennzeichnet,** daß die Torsteuerschaltung einen Statusbitdecoder (21) aufweist, die Ausgangssignale der Zählschaltung (20) und des Statusbitdecoders (21) einer Verknüpfungslogik (22) zugeführt werden, und am Ausgang der Verknüpfungslogik (22) das Torsteuersignal zur Verfügung gestellt wird.

11. Empfänger nach einem oder mehreren der Ansprüche 7- 10,
**dadurch gekennzeichnet,** daß die Schaltung zur Erfassung der Zeitbasisschwankungen des Kennsignals einen Verzögerer (14) zur Verzögerung des Kennsignals um eine definierte Zeitspanne, einen Summierer (15) zur Addition von verzögertem und unverzögertem Kennsignal, einen an den Ausgang des Summierers angeschlossenen Gleichrichter (16), einen an den Ausgang des Gleichrichters angeschlossenen Tiefpaß (17) und eine an den Ausgang des Tiefpasses angeschlossene Schwellwertschaltung (18) aufweist, an deren Ausgang das Steuersignal zur Verfügung steht.

12. Empfänger nach einem oder mehreren der Ansprüche 7 - 11,
**dadurch gekennzeichnet,** daß er Mittel zur Detektion der Phasenlage des Burstsignals (B2) gegenüber dem in der Horizontalaustastlücke des Farbfernsehsignals vorhandenen Burstsignal (B1) aufweist.

**Claims**

1. A colour television system comprising a transmitter for coding and receiver for decoding colour television signals, wherein at the receiving end in accordance with a control signal either decoding according to the colour-plus process or decoding using combor notch filters takes place, characterised in that

- in the transmitter a code signal is inserted into the active part of a line of the colour television signal not visible on the screen and

- for the determination of the control signal in the receiver the time-base fluctuations of the code signal are determined.

2. A colour television system according to Claim 1, characterised in that the code signal is a burst signal (B2) with the colour auxiliary carrier frequency.

3. A colour television system according to Claim 2, characterised in that in the receiver a comparison between the burst signal (B2) and the burst signal (B2) delayed by a specified time period takes place and that the control signal is determined from the comparison result.

4. A colour television system according to Claim 2 or 3, characterised in that by a suitable selection of the phase position of the burst signal (B2) compared to the burst signal (B1) present in the horizontal blanking interval of the colour television signal, further data relating to the transmitter-end signal processing are transmitted from the transmitter to the receiver and these further data are transparent in respect of a recording/playback process.

5. A transmitter for coding colour television signals in a colour television system according to one or more of Claims 1 - 4 which comprises means (3) for inserting a burst signal (B2) with the colour auxiliary carrier frequency into the active part of a line of the colour television signal not visible on the screen, characterised in that the burst signal (B2) remains coupled to the synchronising signal of the colour television signal according to the standard.

6. A transmitter according to Claim 5, characterised in that by a suitable selection of its phase position compared to the burst signal (B1) present in the horizontal blanking interval of the colour television signal, the burst signal (B2) contains further data relating to the transmitter-end signal processing.

7. A receiver for decoding colour television signals in a colour television system according to one or more of Claims 1 - 4, characterised in that it comprises:

- a gate circuit (13) which transmits the code signal present in the active part of a line of the colour television signal not visible on the screen and

- a circuit (14, 15, 16, 17, 18) for detecting the time-base fluctuations of the code signal, at whose output the control signal is available.

8. A receiver according to Claim 7, characterised in that it comprises a gate control circuit (19, 20, 21, 22) which generates a gate control signal using the synchronising signals separated from the colour television signal and at least one status bit transmitted together with the colour television signal.

9. A receiver according to Claim 8, characterised in that the gate control circuit comprises a counting circuit (20) which is supplied with the synchronising signals separated from the colour television signal.

10. A receiver according to Claim 9, characterised in that the gate control circuit comprises a status bit decoder (21) which supplies output signals from the counting circuit (20) and from the status bit decoder (21) to a logic gate (22) and the gate control signal is made available at the output of the logic gate (22).

11. A receiver according to one or more of Claims 7 - 10, characterised in that the circuit for detecting the time-base fluctuations of the code signal comprises a delay component (14) for delaying the code signal by a defined time interval, an adder (15) for adding delayed and undelayed code signal, a rectifier (16) connected to the output of the adder, a low-pass filter (17) connected to the output of the rectifier, and a threshold value circuit (18) which is connected to the output of the low-pass filter and at whose output the control signal is available.

12. A receiver according to one or more of Claims 7 - 11, characterised in that it comprises means for detecting the phase position of the burst signal (B2) compared to the burst signal (B1) present in the horizontal blanking interval of the colour television signal.

**Revendications**

1. Système de télévision en couleurs comportant un émetteur pour le codage et un récepteur pour le décodage de signaux de télévision en couleurs, et dans lequel côté réception, en fonction d'un signal de commande, un décodage selon le procédé Color-Plus ou un décodage utilisant des filtres en peigne ou des filtres couple-bande est exécuté, caractérisé en ce que

- dans l'émetteur un signal caractéristique est introduit dans la partie active d'une ligne, non visible sur l'écran, du signal de télévision en couleurs, et
- pour déterminer le signal de commande dans le récepteur, des variations de la base de temps du signal caractéristique sont déterminées.

2. Système de télévision en couleurs selon la revendication 1, caractérisé en ce que le signal caractéristique est un signal de salve (B2) possédant la fréquence de la porteuse couleur.

3. Système de télévision en couleurs selon la revendication 2, caractérisé en ce qu'une comparaison du signal de salve (B2) au signal de salve (B2) retardé d'un intervalle de temps déterminé est exécutée dans le récepteur et que le signal de commande est déterminé à partir du résultat de la comparaison.

4. Système de télévision en couleurs selon la revendication 2 ou 3, caractérisé en ce que, grâce à un choix approprié de la position de phase du signal de salve (B2) par rapport au signal de salve (B1) présent pendant l'intervalle de suppression horizontale du signal de télévision en couleurs, d'autres informations concernant le traitement du signal côté émetteur sont transmises de l'émetteur au récepteur, et ces autres informations sont transparentes en rapport avec un processus d'enregistrement/de reproduction.

5. Emetteur pour le codage de signaux de télévision en couleurs dans un système de télévision en couleur selon une ou plusieurs des revendications 1-4, qui comporte des moyens (3) pour insérer un signal de salve (B2) possédant la fréquence de la porteuse couleur dans la partie active d'une ligne, non visible sur l'écran, du signal de télévision en couleurs, caractérisé en ce que le signal de salve (B2) est en outre couplé, d'une manière adaptée à la norme, au signal de synchronisation du signal de télévision en couleurs.

6. Emetteur selon la revendication 5, caractérisé en ce que grâce à un choix approprié de sa position de phase par rapport au signal de salve (B1) présent pendant l'intervalle de suppression horizontale du signal de télévision en couleurs, le signal de salve (B2) contient d'autres informations contenant le traitement de signaux sur le côté émission.

7. Récepteur pour le décodage de signaux de télévision en couleurs dans un système de télévision en couleurs selon l'une des revendications 1-4, caractérisé en ce qu'il comporte :

- un circuit de porte (13) qui est passant pour le signal caractéristique et qui est présent dans la partie active d'une ligne, non visible sur l'écran, de signal de télévision en couleurs, et
- un circuit (14,15,16,17,18) pour détecter les variations de la base de temps du signal caractéristique et à la sortie duquel le signal de commande est disponible.

8. Récepteur selon la revendication 7, caractérisé en ce qu'il comporte un circuit de commande de porte (19,20,21,22) qui produit un signal de commande de porte moyennant l'utilisation des signaux de synchronisation séparés du signal de télévision en couleurs et d'au moins un bit d'état transmis conjointement avec le signal de télévision en couleurs.

9. Récepteur selon la revendication 8, caractérisé en ce que le circuit de commande de porte possède un circuit de comptage (20), auquel sont envoyés les signaux de synchronisation qui sont séparés du signal de télévision en couleurs.

10. Récepteur selon la revendication 9, caractérisé en ce que le circuit de commande de porte comporte un décodeur de bits d'état (21), que les signaux de sortie du circuit de comptage (20) et du décodeur de bits d'état (21) sont envoyés à une logique combinatoire (22) et que le signal de commande de porte est disponible à la sortie de la logique combinatoire (22).

11. Récepteur selon une ou plusieurs des revendications 7-10, caractérisé en ce que le circuit pour détecter les variations de la base de temps du signal caractéristique comporte un circuit de retardement (14) pour retarder le signal caractéristique d'un intervalle de temps défini, un additionneur (15) pour additionner le signal caractéristique retardé et le signal caractéristique non retardé, un redresseur (16) raccordé à la sortie de l'additionneur, un filtre passe-bas (17) raccordé à la sortie du redresseur et un circuit à valeur de seuil (18), qui est raccordé à la sortie du filtre passe-bas et à la sortie duquel le signal de commande est disponible.

12. Récepteur selon une ou plusieurs des revendications 7-11, caractérisé en ce qu'il comporte des moyens pour détecter la position de phase du signal de salve (B2) par rapport au signal de salve (B1) présent dans l'intervalle de suppression horizontale du signal de télévision en couleurs.

FIGUR 1

FIGUR 2

FIGUR 3